# EUROPÄISCHE PATENTSCHRIFT

(11) **EP 2 759 405 B1**
(45) Veröffentlichungstag und Bekanntmachung des Hinweises auf die Patenterteilung: **19.09.2018**
(21) Anmeldenummer: 14151766.4
(22) Anmeldetag: 20.01.2014
(51) Int. Cl.: B41F 13/60, B41F 13/68, B41F 13/70, B41F 33/00, B42C 19/02, H04N 1/00

(54) **Verfahren zur Erfassung und Übertragung von prozessleitenden Daten vor und/oder innerhalb eines Druckprozesses bei der Herstellung von Druckprodukten in einer Druckmaschine**
Method for the capture and transmission of process control data prior to and/or within a print process for the production of printed products in a printing machine
Procédé d'enregistrement et de transmission de données de commande de processus avant et/ou dans un processus d'impression, dans la fabrication de produits imprimés dans une machine d'impression

(30) Priorität: 25.01.2013 CH 3142013
(43) Veröffentlichungstag der Anmeldung: 30.07.2014
(73) Patentinhaber: Müller Martini Holding AG, 6052 Hergiswil (CH)
(72) Erfinder: Bracher, Markus, 6264 Pfaffnau (CH); Schenker, André, 6015 Luzern (CH); Künzli, Peter, 6204 Sempach (CH)

(56) Entgegenhaltungen:
- EP-A1- 2 481 585
- EP-A2- 1 798 178
- DE-A1- 10 338 973

## Beschreibung

### Technisches Gebiet

Verfahren zur Erfassung und Übertragung von prozessleitenden Daten vor und/oder innerhalb eines Druckprozesses bei der Herstellung von Druckprodukten in einer Druckmaschine gemäss den Merkmalen des Anspruchs 1.

### Stand der Technik

Die Festlegung von Daten auf einen Zeitpunkt vor dem eigentlichen Druckprozess schliesst es aus, Informationen über den Erfolg oder die Qualität des Druckprozesses an sich weiter zu geben. Wird beispielsweise ein Barcode eingesetzt um die Auftragsnummer an die Weiterverarbeitung zu kommunizieren, so wird dieser Barcode entweder während der Ausschiessens (Imposition) oder während des Rasterprozesses (Raster Image Process) ins Druckbild eingefügt. Während des Druckprozesses wird der Barcode auf das Papier übertragen. Findet während des Druckprozesses eine Störung desselben statt, z.B. durch einen Stoppbefehl, kann der Barcode nicht mehr verändert werden. Die Weiterverarbeitung liest den Barcode ein, kann aber nicht feststellen, ob die Druckqualität des betroffenen Druckbogens in Ordnung ist.

Folgende Beispiele werden zur Illustration vorgebracht:
Datenübermittlung über Barcode, angebracht in der Mitte des Druckbogens. Die Druckmaschine stoppt aufgrund eines internen Fehlers abrupt. Auf zufälliger Basis durch den Stoppzeitpunkt gegeben, entsteht eine der beiden Situationen:
Stoppposition vor oder während des Barcodes. Die Weiterverarbeitung kann den Barcode nicht einlesen. Der betroffene Druckbogen kann nicht erkannt und/oder zugeordnet werden und wird ausgeschleust. Die Folge davon ist, dass das Endprodukt fehlerfrei ausfällt.

Stoppposition nach dem Barcode. Die Weiterverarbeitung kann den Barcode einlesen. Der betroffene Druckbogen wird korrekt erkannt und/oder zugeordnet. Er landet als guter Bogen im Endprodukt, wobei dann die Folge ist, dass das Endprodukt nicht mehr fehlerfrei ist.

Weit etabliert ist das Aufdrucken spezifischer Marken, welche von der Weiterverarbeitung wieder eingelesen werden. So erfolgt klassischerweise z.B. eine Querschneider-Steuerung anhand von Schnittmarken oder eine Buchtrennung anhand von Trennmarken. Vorteilhaft ist hier die Einfachheit dieser Lösung. Es müssen nur Positionen und ggf. Freistellungszonen definiert werden. (Betreffend kodifizierte Druckmarken, siehe EP2481585 A1). Nachteil sind die sehr beschränkten Funktionsmöglichkeiten (Binär-Information: Marke ist da oder nicht).

Ebenfalls verbreitet ist das Aufdrucken von Strich- oder Punktcodes oder ähnlichen Erkennungsmerkmalen, welche über geeignete Sensorik in der Weiterverarbeitung eingelesen werden. Auf diese Weise können mehr oder weniger umfangreiche Datenmengen weitergegeben werden. Dies kommt häufig bei der Produktidentifikation zum Einsatz, z.B. im Sinne der Auftragsdatenzuweisung oder bei personalisierten Produkten. Vorteil ist auch hier die relativ einfache Umsetzung. Nachteil ist oft die Notwendigkeit von zusätzlichen Marken, da die Position eines Strichcodes meist nicht für präzise Regelungen (z.B. Querschneider) verwendet werden kann. Bekannt sind auch Anwendungen, in denen das Drucksystem mittels Datenkommunikation Informationen an die Weiterverarbeitung übermittelt werden. Konkret wird dies beispielsweise anhand eines UP3I-Protokolls umgesetzt. Vorteil dieser Lösung ist die fast unbegrenzte Datenmenge, die so weitergegeben werden kann. Nachteil ist die schwierige Zuordnung der Daten-Telegramme auf eine physische Papierposition. Dies erfolgt meist über theoretisch geförderte Papierlängen, erfordert aber oft zusätzliche Barcodes oder Marken.

Zusammenfassend lässt sich feststellen, dass alle erwähnten Verfahren mehr oder weniger Informationen vom Drucksystem an die Weiterverarbeitung übermitteln können. Die Daten beziehen sich weitestgehend auf den Produktstrom (Signaturnummer, Auftragskennzeichnung) oder Trigger zur Funktionssteuerung (Querschneider, Weichensysteme, selektive Zuführung). Alle aufgedruckten Informationen werden zeitlich vor dem Druckzeitpunkt festgelegt. Die bekannten Telegramm-Lösungen ersetzen oder ergänzen die aufgedruckten Informationen im gleichen Sinn.

Des Weiteren fallen aber im Drucksystem Informationen an, die nicht mittels vorausgeschossenen Barcodes übermittelt werden können, z.B. die Markierung des letzten Druckbogens eines Auftrags. Das Ausschiessen der Druckbogen bezieht sich immer auf eine Kopie des Produkts, welches dann in beliebiger Zahl repetitiv gedruckt wird. Somit kann nicht die letzte Kopie des Auftrags einen anderen Barcode enthalten. Realisiert werden könnte dies höchstens mittels in Echtzeit zugefügter Barcodes im Kontext des Rasterprozesses, was aber mit einem hohen Aufwand verbunden ist und eine hohe Anforderung ans Datenmanagement des Drucksystems bedeutet.

### Darstellung der Erfindung

Hier will die Erfindung Abhilfe schaffen. Aufgabe der Erfindung ist es, eine Reihe von systemimmanenten Vorkehrungen vorzusehen, welche eine zeitnahe Übertragung und/oder Übermittlung von Informationen im Zusammenhang mit einem Druckprozess gewährleisten, und welche Informationen dann die im Voraus bestimmte Weiterverarbeitung der Druckprodukte sicherstellen.

Diese Aufgabe wird durch den Gegenstand des unabhängigen Anspruchs 1 gelöst. Vorteilhafte Weiterbildungen der Erfindung sind in den abhängigen Patentansprüchen angegeben.

Erfindungsgemäss wird das Drucksystem in die Lage versetzt, über die internen Vorgänge bei der Produktion und Weiterverarbeitung von Druckprodukten Bescheid zu wissen. Insbesondere Stopppositionen sind präzise bekannt, das Drucksystem weiss jederzeit, welche Druckbogen vollständig oder unvollständig gedruckt wurden. Ebenso sind weitere prozessleitende Informationen ebenfalls bekannt oder unmittelbar beschaffbar. Die Erfindungsidee verfolgt nun das Ziel, diese im Drucksystem vorhandenen Daten der Weiterverarbeitung zeittauglich und materiell zutreffend zugänglich zu machen.

Zu diesem Zweck wird ein Verfahren zur Erfassung und Übertragung von prozessleitenden Daten vor und/oder innerhalb eines Druckprozesses bei der Herstellung von Druckprodukten in einer Druckmaschine, welche vorzugsweise eine Digitaldruckmaschine ist, vorgeschlagen, wobei diese Daten mindestens anhand von mit mindestens einem Druckprodukt in Wirkverbindung stehenden Erkennungsmerkmalen, im folgenden Druckmarke genannt, erfasst werden, wobei die aus der Druckmarke resultierenden Daten mindestens einem dem Druckprozess nachgeschalteten Verarbeitungsaggregat übertragen und/oder übermittelt werden. Während des integralen Druckprozesses wird nun eine erste Ermittlung von Daten durchgeführt, welche für mindestens eine redundante Überprüfung der aus der Druckmarke hervorgehenden Daten herangezogen werden.

Dabei ist zu berücksichtigen, dass eine solche Druckmarke, welche vorzugsweise auf einer Kodifizierung beruht, mindestens einem Druckprodukt zugehörig ist. Diese Druckmarke, welche bestimmungsgemäss produktbezogene Daten beinhaltet, sorgt dafür, dass jene Informationen zur Verfügung stehen, welche für die Weiterverarbeitung der Druckprodukte unabdingbar sind.

Druckmarken mit produktbezogenen Daten umfassen unter anderen Informationen über eine Querschneider-Steuerung anhand von Schnittmarken oder eine Buchtrennung anhand von Trennmarken. Selbstverständlich können Druckmarken auch noch andere produktbezogene Daten erfassen.

Innerhalb des Druckprozesses findet erfindungsgemäss demnach mindestens eine redundante Überprüfung der aus der Druckmarke hervorgehenden produktbezogenen Daten statt, mit dem Ziel, festzustellen, inwieweit diese Daten mit den effektiven aus dem Druckprozess erfassten oder ermittelten Daten übereinstimmen.

Erfindungsgemäss hat man zunächst mit einer redundanten Überprüfung zu tun, eingedenk der Tatsache, dass vor oder während des Druckprozesses mindestens zu produktbezogenen Interferenzen kommen kann, welche von der Druckmarke nicht mehr erfasst und wiedergeben werden können.

Findet sonach keine solche Überprüfung statt, so besteht immer die immanente Gefahr, dass es zu Fehlschlüssen bei der Weiterverarbeitung der Druckprodukte kommt, weil die Daten aus der Druckmarke mit dem effektiven Zustand des Druckproduktes im Verlauf des Druckprozesses nicht mehr übereinstimmen, oder zumindest in Punkten differieren.

Dabei ist zu berücksichtigen, dass es sich bei der Feststellung von differenten Punkten auch um Wertigkeiten handeln könnten, welche nicht mehr eine zwingende prozessorientierte Konsequenz auslösen müssen, sondern auf Grund ihrer geringen Stellenwert zu den sogenannten weichen Faktoren gehören, welche für den weiteren Produktionsablauf nicht mehr zwingend zu berücksichtigen sind. Beispielsweise löst bei der redundanten Überprüfung die Nichtbestätigung einer reinen informativen und sekundären Kodierung, welche für den Herstellungsprozess der Druckprodukte keinen unmittelbaren Einfluss hat, keine Konsequenzen auf den weiteren Verlauf des Druckprozesses. Allenfalls lässt sich in solchen Fällen vorsehen, dass eine solche Feststellung später einer neuerlichen Gewichtung unterzogen wird, also das System auf eine Flexibilisierung ausgelegt ist.

Die datenmässige Erfassung während des Druckprozesses beschränkt sich aber nicht nur auf die redundante Überprüfung der aus der Druckmarke hervorgehenden Daten, sondern es werden gleichzeitig innerhalb des Druckprozesses weitere hinsichtlich des Druckproduktes qualitätsbezogene Daten erfasst, welche von der Druckmarke nicht oder noch nicht erfasst wurden, welche aber für die Weiterverarbeitung der Druckprodukte eine hohe Relevanz entfalten können.

Demnach lässt sich sagen, dass während des ganzen Druckprozesses eine integrale Überprüfung des Druckproduktes sowohl auf die produkt- als auch auf die festgelegten qualitätsbezogen Daten stattfindet, welche dann der Weiterverarbeitung der Druckprodukte zur Verfügung gestellt werden, bevor die verarbeitungsgemässe Umsetzung stattfindet.

Im Normalfall wird die Druckmarke längs einer Nutzspur (siehe EP2481585 A1) angebracht, wobei in diesem Fall die Druckmarke visuell wahrnehmbar bleibt. Indessen, es lassen sich auch nicht visuell wahrnehmbare Kodifizierungen anbringen, bei welchen dann auf eine eigentliche nutzspurmässige Anbringung verzichten werden kann, womit in solchen Fälle auch die einzelnen Druckbogen direkt mit Kodifizierungen versehen werden können, was dann die verarbeitungsgemässe Zuordnung wesentlich erleichtert.

Über ein geeignetes Kommunikationssystem, beispielsweise über Ethernet UDP/IP, werden Datentelegramme von der Druckmaschine an die Weiterverarbeitung übermittelt. Der Absendezeitpunkt ist auf einen Zeitpunkt X festgelegt, spätestens unmittelbar nach dem erfolgten Druckprozess, und definiert sich durch das Vorhandensein der benötigten Informationen.

Typischerweise ist der Absendezeitpunkt auf das Verlassen der Druckprodukte nach Durchlauf der Trocknungs- oder Fixiereinheit, wobei etliche Informationen bereits während des Druckprozesses vor diesem Durchlauf erfasst und weitergeleitet werden können. Mindestens die genannten Einheiten, Trocknungs- oder Fixiereinheit, bilden einen integrierenden Bestandteil des Druckprozesses.

Beim Verlassen der Druckprodukte am Ausgang des Druckprozesses kann die Druckmaschine auf Grund der redundanten Überprüfung eine abschliessende Aussage über die Richtigkeit der aus der Druckmarke hervorgehenden produktbezogenen Daten machen. Gleichzeitig wird durch die Erfassung der qualitätsbezogenen Daten des Druckproduktes bzw. des Druckbogens während des Druckprozesses eine Gesamtinformation für die Weiterverarbeitung zur Verfügung gestellt. Komplementäre Informationen, die von Fall zu Fall erfasst werden können, und die sowohl mit der redundanten Überprüfung der Druckmarke als auch mit den übrigen ermittelten Daten während des Druckprozesses im Zusammenhang stehen, liegen dann mit der Beendigung des Druckprozesses ebenfalls vor.

Eine Schlüsselstellung bei der Übertragung resp. Übermittlung der Daten an die Weiterverarbeitung betrifft die Zuordnung der Daten-Telegramme zu einem bestimmten physischen Druckbogen. Um die Implementation auf Seite des Drucksystems zu vereinfachen, werden nur wenige Eckdaten festgelegt:
- Die Telegramme dürfen erst gesendet werden, wenn die Daten zur Verfügung stehen.
- Die Telegramme müssen spätestens so abgeschickt werden, dass sie vor dem betroffenen Druckbogen in der Weiterverarbeitung ankommen.
- Die Reihenfolge der Telegramme sollte immer eingehalten werden, in Einzelfällen dürfen sich jedoch Telegramme zueinander anders verhalten.
- Für jeden Druckbogen gibt es genau ein Telegramm. Mehrfachtelegramme zu demselben Druckbogen sind nicht zulässig.

Diese zunächst auf eine Optimierung "Aufwand/Ertrag" festgelegten Sende-Randbedingungen können nach Bedarf bei der Weiterverarbeitung der Druckprodukte durch zusätzliche Auftrags- und Signaturen-Daten ergänzt werden, wobei dann eine Abgleichung auf Grund der Gesamtmenge der vorliegenden Daten vorgenommen wird. Insbesondere greift diese Abgleichung immer dann ein, wenn weiterverarbeitungsseitig die Zuordnung eines Druckbogens erschwert ist, womit dann die Sequenz- und Auftragszuordnung sichergestellt werden können. Zusätzlich lässt sich noch die Verwendung eines Kopienzählers vorsehen, um innerhalb eines Auftrags mit einer Anzahl identischer Kopien eine spezifische Kopie zu referenzieren.

Bei der Übertragung resp. Übermittlung der aus dem Druckprozess gewonnenen Daten stellt sich die Frage, welche Rangstellung differierende Informationen für die Weiterverarbeitung einnehmen können. Differierende Informationen sind meistens dann zu erwarten, wenn aus der redundanten Überprüfung der Daten der Druckmarke keine Übereinstimmung zwischen den ursprünglichen und den neu eruierten Daten vorherrscht. Allerdings kann es vorkommen, dass sich selbst bei neu während des Druckprozesses eruierten Daten, wie dies beispielsweise bei den qualitätsbezogenen Daten der Fall ist, Widersprüche gegenüber den bereits gesammelten Informationen ergeben können.

In solchen Fällen ist es wichtig, die operative Rangstellung der Daten allgemein zu definieren, damit Mehrfachtelegramme zu demselben Druckbogen absolut vermieden werden können.

Eine erste Möglichkeit besteht darin, dass die zuletzt während des Druckprozesses gewonnenen Daten gegenüber den produktbezogenen Vorgaben aus der Druckmarke absolut Vorrang geniessen. Dies soll im Normalfall auch für die qualitätsbezogenen Daten gelten, welche erfindungsgemäss während des Druckprozesses, losgelöst von der redundanten Überprüfung, ermittelt werden.

Allerdings lassen sich Fälle vorstellen, bei welchen eine gewisse Differenzierung angebracht ist, beispielsweise wenn die qualitätsbezogenen Daten nur bei gewissen Druckprodukten oder Situationen eine absolute Rangstellung geniessen.

Selbst wenn die redundante Überprüfung der aus der Druckmarke hervorgehenden Daten während des Druckprozesses zu keiner anderslautenden Schlussfolgerung geführt hat, können die qualitätsbezogenen Daten dann immer noch eine graduell geartete Substitution oder Fehlerberichtigung gegenüber den produktbezogenen Daten auslösen, wobei der Grad einer solchen Implementierung von Fall zu Fall verschieden sein kann.

Es ist auch möglich, dass gewisse qualitätsbezogene Daten nur eine nachrangige operative Rangzuweisung einnehmen sollen, beispielsweise dann, wenn sich Divergenzen zwischen den ursprünglichen Daten aus der Druckmarke und denjenigen Daten aus dem Druckprozess ergeben sollten.

Sonach kann die abgleichende Überprüfung der qualitätsbezogenen Daten zu festgestellten Unterschieden führen, welche wegen ihrer geringeren Stellenwert als weiche Faktoren taxiert sind, welche zu keiner unmittelbaren Massnahme im operativen Prozess führen muss. Beispielsweise lassen sich qualitätsbezogene Funktionen oder Feststellungen vorstellen, welche zwar in einer ersten Überprüfung als nicht erbracht respektive vorhanden festgestellt werden, das System selber aber im Nachgang erkennt, inwieweit diese Feststellung zutreffend war oder nicht, also das System auf eine Flexibilisierung ausgelegt ist.

Wie bereits oben postuliert, gilt auch für übertragene resp. übermittelte Daten auf Grund einer vorgenommenen operativen Rangzuweisung immer die Maxime, dass diese Daten an ein Verarbeitungsaggregat immer vorauseilend gegenüber dem betroffenen Druckprodukt oder Druckbogen zugeführt werden müssen.

Wie oben bereits signalisiert, kann eine Überholung der der Weiterverarbeitung zugeleiteten Datenpakete zueinander stattfinden, wobei die normalerweise praktizierte sequentielle Übertragung resp. Übermittlung bei Bedarf zu einer teilweise sequentiellen mutieren kann, wobei sogar eine Überlappung nicht ausgeschlossen bleibt, immer unter der Prämisse, dass die bei der Weiterverarbeitung ankommende Information eindeutig ausfällt. Ob eine Überholung der Daten zueinander stattfindet soll, wird von Fall zu Fall entschieden.

Das System sieht dann vor, dass ein durch mindestens eine Information erkanntes fehlerbehaftetes Druckprodukt sofort ausgeschieden wird oder im Nachgang zu einer Ausscheidung kommt. Betrifft diese erste Ausscheidung einen Druckbogen, so wird grundsätzlich im Nachgang eine fortlaufende Ausscheidung aller nachfolgenden Druckbogen vorgenommen, welche mit dem ausgeschiedenen Druckbogen ein Teildruckprodukt, einen Teilbuchblock oder Buchblock bilden. Die Wiederaufnahme der fortführenden Belieferung des vor der einsetzenden Ausscheidung unvollständig gebliebenen Teil- oder Endproduktes setzt dann wieder ein, wenn eine Nachlieferung des ausgeschiedenen Druckbogens sicher gestellt ist.

Die wesentlichen Vorteile der Erfindung sind darin zu sehen, dass:
Mit dem aus der Gesamtheit der übermittelten Daten gebildeten Status werden die mit der Weiterverarbeitung betrauten Verarbeitungsaggregate in die Lage versetzt, zu erkennen, ob die ankommenden Druckbogen alle notwendigen Eigenschaften aufweisen, welche für die Verarbeitung zu einem Endprodukt unverzichtbar zur Verfügung stehen müssen. Damit können alle Stopp-, Störungs- und Nothaltsituationen vollautomatisch und hochzuverlässig aufgelöst werden.

Über einen Operation-Mode können spezielle Wartungs- und Aufstart-Druckmuster zuverlässig von guten Signaturen unterschieden und entsprechend ausgeschleust werden. Zusätzlich ermöglicht diese Information, spezifische Qualitätsmuster in einen Druckauftrag einzuschieben und diese Druckbogen auf eine gesonderte Auslage zu verschieben. Damit können kundenseitige Qualitätssicherungsmassnahmen aufgebaut werden.

Die "End-of-Job-Information" ermöglicht eine zuverlässige Erkennung des letzten Druckbogens eines Auftrags. Mit dieser Information kann das Leerfahren oder das Umrüsten auf einen Folgeauftrag positionsgenau gestartet werden, was insbesondere für "Multi-Job-Produktion" essentiell wichtig ist.

### Ausführungen der Erfindung

Die nahtlose Integration einer Digitaldruckmaschine in die "SigmaLine" der Anmelderin gemäss EP1288015 A1 macht einen wesentlichen Marktvorteil der "Book-on-Demand"-Lösung. Durch diese Integration ist es möglich, einen durchgängigen Workflow von der Druckvorstufe über den Digitaldruck bis zur Inline-Weiterverarbeitung anzubieten. Eine Reihe von Vorkehrungen ermöglicht, eine produktbezogene Verfolgung mit Qualitätssicherungsmassnahmen und Komfortfunktionen, wie automatischen Reprints, basierend auf einem einzigen Jobticket, zu sichern. Ein wesentliches Alleinstellungsmerkmal der genannten "Book-on-Demand"-Lösung der Anmelderin besteht darin, dass eine enge Integration der Digitaldruckmaschine in den Prozess möglich ist. Erst dank dieser Integration ist diese Lösung in der Lage, ihre sehr kurzen Umrüstzeiten zwischen den Aufträgen sicher zu stellen.

Die bei den bekannt gewordenen BoD-Systemen (Book-on-Demand) Doppelspurigkeiten im Bereich der Auftragsvorbereitung gibt es bei der genannten "SigmaLine" nicht. Der Maschinenführer bereitet den Auftrag an der zentralen Steuerung vor und schickt ihn per Mausklick gleichzeitig an die Digitaldruckmaschine und an die Weiterverarbeitung weiter.

Alle Komponenten verwenden die gleiche Datenbasis und richten sich optimal aufeinander ein. Fehleingaben und Missverständnisse beim manuellen Übertragen der Daten zwischen den Komponenten sind bei der "SigmaLine" prinzipbedingt ausgeschlossen. Ein zentrales Element in diesen Konzepten ist die zeitnahe Weitergabe von Informationen der Druckmaschine an die nachfolgende Weiterverarbeitung, welche Auskunft über die Qualität der gedruckten Seiten geben und die Exemplare eine genaue Produktverfolgung sicherstellen.

Nachfolgend ein Auszug aus der Spezifikation der "Sig Events", auch unter "SIG EVENTS" bekannt geworden. Daraus ist ersichtlich, nach welchen Kriterien der Aufbau und der Inhalt der Daten-Telegramme bewerkstelligt werden.

Telegramm-Spezifikation:
Nachfolgend ein Auszug aus der Spezifikation der SIG EVENTS. Daraus sind der Aufbau und der Inhalt der Daten-Telegramme ersichtlich.

Ein "SIG EVENTS"-Telegramm ist eine Zeichenkette aus ASCII-Zeichen.
Das Telegramm startet mit einer geschweiften Klammer '{' und endet mit einer solchen '}'.
Die Werte sind durch Doppelpunkte separiert.
Numerische Werte werden als Zeichenkette eingesetzt.

Generisches Telegramm-Format:

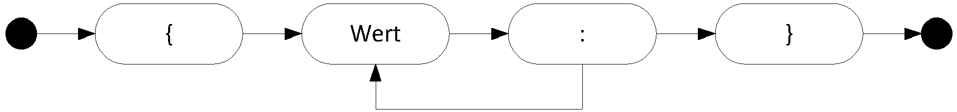

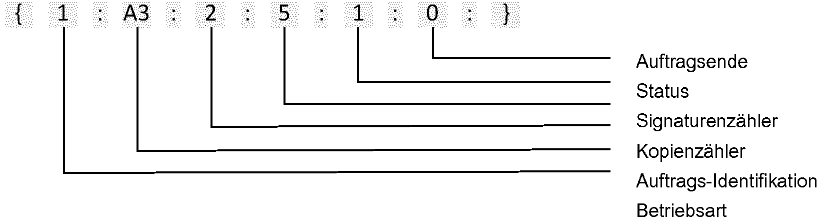

| **Position** | **Attribut** | **Bereich** | **Wert** | **Bedeutung** |
|---|---|---|---|---|
| 1 | Betriebsart | 0..255 | 0 | Unbedrucktes Papier, Makulatur (optional) |
| | | | 1 | Bedruckt (Standardwert) |
| | | | 2 | Druckmuster, Testmuster, etc. (optional) |
| | | | 3 | Qualiätsdruckmuster (optional) |
| 2 | Auftrags-Identifikation | 1..63 Bytes | Text/ UTF-8 | Attribut JobID aus dem JDF-Auftragsticket |
| 3 | Kopienzähler | 0..2³²-1 | 0 | Unbedrucktes oder schlecht bedrucktes Papier |
| | | | 1..max | Inkrementierender Zähler für jede Produktkopie. Wird nur bei Betriebsart 1 inkrementiert. |
| 4 | Signaturenzähler | 0..2³²-1 | 0 | Unbedrucktes Papier, Makulatur, Druckmuster, Testmuster, etc. |
| | | | 1..max | Inkrementierender Zähler für jede Signatur. Wird nur bei Betriebsart 1 inkrementiert. |
| 5 | Status | 0..255 | 0 | Schlecht, wird ausgeschleust |
| | | | 1 | Gut, wird für die Produktion verwendet |
| 6 | Auftragsende | 0..255 | 0 | Eine beliebige Signatur innerhalb eines Auftrags |
| | | | 1 | Letzte Signatur der letzten Kopie eines Auftrags oder letzte gut bedruckte Signatur im Fall eines Auftragsabbruchs. |

## Patentansprüche

1. Verfahren zur Erfassung und Übertragung von prozessleitenden Daten vor und/oder innerhalb eines Druckprozesses bei der Herstellung von Druckprodukten in einer Druckmaschine, wobei diese Daten mindestens anhand von mit mindestens einem Druckprodukt in Wirkverbindung stehenden Erkennungsmerkmalen erfasst werden, wobei die Erkennungsmerkmale anhand einer Druckmarke erfasst werden, wobei die Erkennungsmerkmale auf die Erfassung von produktbezogenen Daten ausgelegt werden, wobei die aus den Erkennungsmerkmalen resultierenden Daten mindestens einem dem Druckprozess nachgeschalteten Verarbeitungsaggregat übertragen und/oder übermittelt werden, **dadurch gekennzeichnet, dass** innerhalb des integralen Druckprozesses eine erste Ermittlung von Daten stattfindet, welche für mindestens eine redundante Überprüfung der aus den Erkennungsmerkmalen hervorgehenden Daten herangezogen werden, und dass die aus dem Druckprozess ermittelten Daten nach der redundanten Überprüfung mit den aus den Erkennungsmerkmalen hervorgehenden Daten zueinander abgeglichen und mindestens einer im Voraus bestimmten Weiterverarbeitungsstation der Druckprodukte übertragen und/oder übermittelt werden.

2. Verfahren nach Anspruch 1, **dadurch gekennzeichnet, dass** die redundante Überprüfung der ermittelten Daten zwischen zwingenden und weichen Vorgaben unterscheidet, dass bei festgestellten Unterschieden hinsichtlich der zwingenden Vorgaben prozessorientierte Massnahmen erfolgen, und dass bei festgestellten Unterschieden hinsichtlich der weichen Vorgaben flexible prozessorientierte Vorkehrungen stattfinden.

3. Verfahren nach Anspruch 1, **dadurch gekennzeichnet, dass** während des integralen Druckprozesses eine weitere Ermittlung von Daten stattfindet, welche qualitätsbezogene Informationen der Druckprodukte erfassen, und welche Daten auf den Druckprozess ausgerichtet werden.

4. Verfahren nach Anspruch 3, **dadurch gekennzeichnet, dass** die qualitätsbezogenen Daten nach deren Erfassung individuell oder abgeglichen mit den produktbezogenen Daten mindestens einer im Voraus bestimmten Weiterverarbeitungsstation der Druckprodukte übertragen und/oder übermittelt werden.

5. Verfahren nach einem der Ansprüche 1-4, **dadurch gekennzeichnet, dass** die qualitätsbezogene Überprüfung der ermittelten Daten zwischen zwingenden und weichen Eigenschaften unterscheidet, dass bei festgestellten Unterschieden hinsichtlich der zwingenden Eigenschaften prozessorientierte Massnahmen erfolgen, und dass bei festgestellten Unterschieden hinsichtlich der weichen Eigenschaften flexible prozessorientierte Vorkehrungen stattfinden.

6. Verfahren nach Anspruch 1, **dadurch gekennzeichnet, dass** der integrale Druckprozess mit dem Verlassen der Druckprodukte aus mindestens zum Druckprozess gehörenden Trocknungs- und/oder Fixiereinheiten abschliesst.

7. Verfahren nach Anspruch 1, **dadurch gekennzeichnet, dass** die Erkennungsmerkmale auf Grund einer kodifizierten Druckmarke operieren, deren Codeelemente visuell wahrgenommen und/oder visuell nicht festgestellt werden.

8. Verfahren nach Anspruch 1, **dadurch gekennzeichnet, dass** die Erkennungsmerkmale auf eine Nutzspur längs einer Papierrolle oder innerhalb eines Druckproduktes oder Druckbogens angebracht werden.

9. Verfahren nach einem oder mehreren der Ansprüche 1-8, **dadurch gekennzeichnet, dass** die innerhalb des Druckprozesses ermittelten qualitätsbezogenen Daten eine absolut prädominante oder quasi-prädominante operative Rangzuweisung gegenüber den aus den Erkennungsmerkmalen oder den aus der redundanten Überprüfung hervorgehenden Daten einnehmen.

10. Verfahren nach einem oder mehreren der Ansprüche 1-8, **dadurch gekennzeichnet, dass** die innerhalb des Druckprozesses ermittelten qualitätsbezogenen Daten eine substitutive oder teilsubstitutive operative Rangzuweisung gegenüber den aus den Erkennungsmerkmalen oder den aus der redundanten Überprüfung hervorgehenden Daten einnehmen.

11. Verfahren nach einem oder mehreren der Ansprüche 1-8, **dadurch gekennzeichnet, dass** die innerhalb des Druckprozesses ermittelten qualitätsbezogenen Daten eine nachrangige operative Rangzuweisung gegenüber den aus den Erkennungsmerkmalen oder den aus der redundanten Überprüfung hervorgehenden Daten einnehmen.

12. Verfahren nach einem der Ansprüche 1-11, **dadurch gekennzeichnet, dass** die produktbezogenen und/oder qualitätsbezogenen Daten an ein Verarbeitungsaggregat vorauseilend gegenüber dem betroffenen Druckprodukt oder Druckbogen übertragen und/oder übermittelt werden.

13. Verfahren nach einem oder mehreren der Ansprüche 1-12, **dadurch gekennzeichnet, dass** im Nachgang zu dem Druckprozess eine unmittelbare oder im Nachgang stattfindende Ausscheidung eines durch die produktspezifischen und/oder qualitätsbezogenen Daten erkannten fehlerbehafteten Druckproduktes oder Druckbogens vorgenommen wird.

14. Verfahren nach Anspruch 13, **dadurch gekennzeichnet, dass** mit der Ausscheidung des fehlerbehafteten Druckproduktes oder Druckbogens eine Ausscheidung aller nachfolgenden Druckprodukte oder Druckbogen vorgenommen wird, welche mit dem ausgeschiedenen Druckprodukt oder Druckbogen eine Einheit oder einen Buchblock bilden.

15. Verfahren nach den Ansprüchen 13-14, **dadurch gekennzeichnet, dass** die fortlaufende Belieferung eines durch die Ausscheidung des fehlerbehafteten Druckproduktes oder Druckbogens unvollständig gebliebenen End- oder Zwischenproduktes mit jenem Druckprodukt oder Druckbogen wieder einsetzt, wenn eine Nachlieferung des ausgeschiedenen fehlerbehafteten Druckproduktes oder Druckbogens stattfindet.

16. Verfahren nach einem der vorangehenden Ansprüche, **dadurch gekennzeichnet, dass** die Reihenfolge der ermittelten Daten an die Weiterverarbeitung ab deren Erfassung zueinander sequentiell, quasi-sequentiell, überlappend, überholend erfolgt.

17. Verfahren nach einem der vorangehenden Ansprüche, **dadurch gekennzeichnet, dass** die Übermittlung der Daten nach einem UDP/IP-System vorgenommen wird.

18. Verfahren nach einem der vorangehenden Ansprüche, **dadurch gekennzeichnet, dass** die übermittelten Daten nach einem "SIG Events"-Spezifikation vorgenommen wird.

19. Verfahren nach einem oder mehreren der Ansprüche 1-18, **dadurch gekennzeichnet, dass** die Druckmaschine eine Digitaldruckmaschine ist.

## Claims

1. Method of acquiring and transmitting process-control data before and/or during a printing process for the production of printed products in a printing machine, wherein these data are acquired at least with the aid of identifying features operatively connected to at least one printed product, wherein the identifying features are acquired with the aid of a print mark, wherein the identifying features are designed for the acquisition of product-related data and wherein the data obtained from the identifying features are transmitted and/or transferred to at least one processing unit disposed downstream of the printing process, **characterised in that** a first data determination operation takes place during the integral printing process, the data being used for at least one redundant check of the data obtained from the identifying features, and that, after the redundant check, the data determined from the printing process are synchronised with the data obtained from the identifying features and transmitted and/or transferred to at least one predetermined finishing station for the printed products.

2. Method according to claim 1, **characterised in that** the redundant check of the determined data distinguishes between absolute requirements and soft requirements, that process-oriented measures are taken if any differences are detected with respect to the absolute requirements and that flexible process-oriented precautions are taken if any differences are detected with respect to the soft requirements.

3. Method according to claim 1, **characterised in that** a further data determination operation takes place during the integral printing process, the data containing quality-related information about the printed products and the data are directed to the printing process.

4. Method according to claim 3, **characterised in that**, after their acquisition, the quality-related data are transferred and/or transmitted individually or synchronised with the product-related data to at least one predetermined finishing station for the printed products.

5. Method according to one of claims 1-4, **characterised in that** the quality-related check of the determined data distinguishes between absolute properties and soft properties, that process-oriented measures are taken if any differences are detected with respect to the absolute properties and that flexible process-oriented precautions are taken if any differences are detected with respect to the soft properties.

6. Method according to claim 1, **characterised in that** the integral printing process ends when the printed products leave at least drying and/or fixing units belonging to the printing process.

7. Method according to claim 1, **characterised in that** the identifying features operate on the basis of a coded print mark the code elements of which are visually observed and/or not visually detected.

8. Method according to claim 1, **characterised in that** the identifying features are applied to a usable strip along a paper reel or within a printed product or printed sheet.

9. Method according to one or more of claims 1-8, **characterised in that** the quality-related data determined during the printing process are assigned an absolutely predominant or quasi-predominant operative ranking compared to the data obtained from the identifying features or from the redundant check.

10. Method according to one or more of claims 1-8, **characterised in that** the quality-related data determined during the printing process are assigned a substitutive or partially substitutive operative ranking compared to the data obtained from the identifying features or from the redundant check.

11. Method according to one or more of claims 1-8, **characterised in that** the quality-related data determined during the printing process are assigned a lower operative ranking than the data obtained from the identifying features or from the redundant check.

12. Method according to one of claims 1-11, **characterised in that** the product-related and/or quality-related data are transmitted and/or transferred to a processing unit ahead of the relevant printed product or printed sheet.

13. Method according to one or more of claims 1-12, **characterised in that**, subsequent to the printing process, a defective printed product or printed sheet detected by the product-specific and/or quality-related data is removed immediately or subsequently.

14. Method according to claim 13, **characterised in that**, when the defective printed product or printed sheet is removed, all subsequent printed products or printed sheets forming a unit or book block with the removed printed product or printed sheet are also removed.

15. Method according to claims 13-14, **characterised in that** the continuous supply of an end product or intermediate product left incomplete as a result of the removal of the defective printed product or printed sheet is restarted when a printed product or printed sheet is supplied subsequently to replace the removed defective printed product or printed sheet.

16. Method according to one of the preceding claims, **characterised in that**, after their acquisition, the determined data are sent to the finishing station in a sequential, quasi-sequential, overlapping or overtaking manner.

17. Method according to one of the preceding claims, **characterised in that** the data are transmitted according to a UDP/IP system.

18. Method according to one of the preceding claims, **characterised in that** the data are transmitted according to a "SIG Events" specification.

19. Method according to one or more of claims 1-18, **characterised in that** the printing machine is a digital printing machine.

## Revendications

1. Procédé d'acquisition et de transmission de données de conduite de processus avant et/ou pendant un processus d'impression lors de la fabrication de produits imprimés dans une machine d'impression, ces données étant acquises au moins au moyen de caractéristiques d'identification liées fonctionnellement à au moins un produit imprimé, les caractéristiques d'identification étant acquises au moyen d'une marque d'impression, les caractéristiques d'identification étant conçues pour l'acquisition de données relatives au produit, les données résultant des caractéristiques d'identification étant transférées et/ou transmises à au moins une unité de traitement placée en aval du processus d'impression, **caractérisé en ce que** pendant le processus d'impression intégral a lieu une première détermination de données qui est utilisée pour au moins une vérification redondante des données résultant des caractéristiques d'identification, et que les données déterminées à partir du processus d'impression sont comparées, après la vérification redondante, avec les données résultant des caractéristiques d'identification et transférées et/ou transmises à au moins un autre poste de traitement des produits imprimés déterminé à l'avance.

2. Procédé selon la revendication 1, **caractérisé en ce que** la vérification redondante des données déterminées fait une distinction entre spécifications obligatoires et spécifications souples, que des mesures orientées processus sont prises lorsque des différences sont constatées dans les spécifications obligatoires, et que des dispositions flexibles orientées processus sont prises lorsque des différences sont constatées dans les spécifications souples.

3. Procédé selon la revendication 1, **caractérisé en ce que** pendant le processus d'impression intégral a lieu une autre détermination de données qui acquiert des informations relatives à la qualité des produits imprimés et qui sont axées sur le processus d'impression.

4. Procédé selon la revendication 3, **caractérisé en ce qu'**après leur acquisition, les données relatives à la qualité sont transférées et/ou transmises individuellement ou après avoir été comparées avec les données relatives au produit à au moins un autre poste de traitement des produits imprimés déterminé à l'avance.

5. Procédé selon l'une des revendications 1 à 4, **caractérisé en ce que** la vérification relative à la qualité des données déterminées fait une distinction entre propriétés obligatoires et propriétés souples, que des mesures orientées processus sont prises lorsque des différences sont constatées dans les propriétés obligatoires, et que des dispositions flexibles orientées processus sont prises lorsque des différences sont constatées dans les propriétés souples.

6. Procédé selon la revendication 1, **caractérisé en ce que** le processus d'impression intégral se termine lorsque les produits imprimés quittent des unités de séchage et/ou de fixage appartenant au moins au processus d'impression.

7. Procédé selon la revendication 1, **caractérisé en ce que** les caractéristiques d'identification opèrent sur la base d'une marque d'impression codifiée dont les éléments de code sont perçus visuellement et/ou ne sont pas déterminés visuellement.

8. Procédé selon la revendication 1, **caractérisé en ce que** les caractéristiques d'identification sont appliquées sur une piste utile le long d'un rouleau de papier ou à l'intérieur d'un produit imprimé ou d'une feuille imprimée.

9. Procédé selon l'une ou plusieurs des revendications 1 à 8, **caractérisé en ce que** les données relatives à la qualité déterminées pendant le processus d'impression ont une priorité opérationnelle absolument prédominante ou quasi prédominante par rapport aux données résultant des caractéristiques d'identification ou de la vérification redondante.

10. Procédé selon l'une ou plusieurs des revendications 1 à 8, **caractérisé en ce que** les données relatives à la qualité déterminées pendant le processus d'impression ont une priorité opérationnelle substitutive ou partiellement substitutive par rapport aux données résultant des caractéristiques d'identification ou de la vérification redondante.

11. Procédé selon l'une ou plusieurs des revendications 1 à 8, **caractérisé en ce que** les données relatives à la qualité déterminées pendant le processus d'impression ont une priorité opérationnelle de second rang par rapport aux données résultant des caractéristiques d'identification ou de la vérification redondante.

12. Procédé selon l'une des revendications 1 à 11, **caractérisé en ce que** les données relatives au produit et/ou relatives à la qualité sont transférées et/ou transmises à une unité de traitement en avance par rapport au produit imprimé ou à la feuille imprimée concerné(e).

13. Procédé selon l'une ou plusieurs des revendications 1 à 12, **caractérisé en ce que**, après le processus d'impression, un produit imprimé défectueux ou une feuille imprimée défectueuse détecté(e) par les données spécifiques au produit et/ou relatives à la qualité est rejeté(e) immédiatement ou ultérieurement.

14. Procédé selon la revendication 13, **caractérisé en ce que** tous les produits imprimés ou feuilles imprimées suivants qui forment une unité ou un corps d'ouvrage avec le produit imprimé ou la feuille imprimée rejeté(e) sont rejetés avec le produit imprimé défectueux ou la feuille imprimée défectueuse.

15. Procédé selon les revendications 13 à 14, **caractérisé en ce que** l'approvisionnement continu d'un produit final ou intermédiaire qui est resté incomplet en raison du rejet du produit imprimé défectueux ou de la feuille imprimée défectueuse reprend avec ce produit imprimé ou cette feuille imprimée lorsque le produit imprimé défectueux ou la feuille imprimée défectueuse qui a été rejeté(e) est réapprovisionné(e).

16. Procédé selon l'une des revendications précédentes, **caractérisé en ce que** les données déterminées sont transmises au traitement ultérieur dans un ordre séquentiel, quasi séquentiel, en se chevauchant ou en se dépassant à partir de leur acquisition.

17. Procédé selon l'une des revendications précédentes, **caractérisée en ce que** la transmission des données s'effectue selon un système UDP/IP.

18. Procédé selon l'une des revendications précédentes, **caractérisée en ce que** la transmission des données s'effectue selon une spécification « SIG Events ».

19. Procédé selon l'une ou plusieurs des revendications 1 à 18, **caractérisé en ce que** la machine d'impression est une machine d'impression numérique.
